# EUROPÄISCHE PATENTSCHRIFT

(11) **EP 1 988 140 B1**
(45) Veröffentlichungstag und Bekanntmachung des Hinweises auf die Patenterteilung: **04.08.2010**
(21) Anmeldenummer: 08103801.0
(22) Anmeldetag: 30.04.2008
(51) Int. Cl.: C09J 7/02

(54) **Hitzereflektierendes Klebeband mit hohem Abrasionsschutz**
Heat reflective adhesive tape with high abrasion protection
Bande adhésive reflétant la chaleur dotée d'une protection anti-abrasive élevée

(30) Priorität: 04.05.2007 DE 102007021505
(43) Veröffentlichungstag der Anmeldung: 05.11.2008
(73) Patentinhaber: TESA SE, 20253 Hamburg (DE)
(72) Erfinder: Möller, Heike, 20253, Hamburg (DE); Kopf, Patrik, Dr., 22417, Hamburg (DE); Pfaff, Ronald, Dr., 22335, Hamburg (DE)

(56) Entgegenhaltungen:
- EP-A- 1 090 969
- EP-A- 1 615 238
- DATABASE WPI Week 200419 Thomson Scientific, London, GB; AN 2004-195126 XP002490284 & JP 2003 301150 A (DENKI KAGAKU KOGYO KK) 21. Oktober 2003 (2003-10-21)

## Beschreibung

Die Erfindung betrifft ein hitzereflektierendes Klebeband mit hohem Abrasionsschutz, vorzugsweise zum Umhüllen von langgestrecktem Gut wie insbesondere Leitungen oder Kabelsätze, mit einem bandförmigen Träger, der aus einem Verbund besteht aus mindestens einer ersten Schicht, die von einem Glasgewebe gebildet wird, und mindestens einer zweiten Schicht, die von einer metallischen Schicht gebildet wird, und mit einer zumindest auf einer Seite des Trägers aufgebrachten druckempfindlichen Klebebeschichtung. Des Weiteren betrifft die Erfindung die Verwendung des Klebebands sowie einen Kabelbaum, der mit dem erfindungsgemäßen Klebeband ummantelt ist.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.
Einen Schutz gegen Hitzestrahlung bieten derartige Klebebänder jedoch nicht.

Zum Nachweis der Erfüllung der bestehenden Anforderungen durch einen Werkstoff sind für elektrische Leitungen und weitere Komponenten für Kabelsätze verschiedene Prüfungen und Tests vorgeschrieben, die unter anderem in einer, unter verschiedenen PKW-Herstellern abgestimmten Werksnorm zusammengefasst sind (LV112 - Niederspannungsleitungen für Kraftfahrzeuge, Fassung vom Juni 2004). Entsprechend dieser Norm muss der Isolationswerkstoff der Leitungen den Anforderungen der VDA 231-106 entsprechen. Die minimale und maximale Dauergebrauchstemperatur (T_{U} und T_{O}) für eine Beanspruchungsdauer von 3000 h liegen beispielsweise bei einer Einordnung in die Temperaturklasse B bei -40 °C und bei 100 °C, wobei das Material einer Kurzzeittemperatur (240 Stunden) von 125 ± 3 °C und einer Überlasttemperatur (6 Stunden) von 150 ± 3 °C standhalten muss.
Elektrische Leitungen und weitere Komponenten für Kabelsätze werden zur Festlegung ihrer maximalen Dauergebrauchstemperatur in Temperaturklassen eingeteilt. Diese Einteilung in Temperaturklassen ist allgemein bekannt und in der folgenden Tabelle nochmals aufgeschlüsselt dargestellt.

| Klasse | Dauer-gebrauchs-temperatur T_{U} bis T_{O} in °C | Kurzzeit-temperatur (T_{O} + 25) °C | Temperatur für thermische Überlast (T_{O} + 50) °C |
|---|---|---|---|
| A | - 40 bis 85 | 110 ± 2 | 135 ± 3 |
| B | - 40 bis 100 | 115 ± 3 | 150 ± 3 |
| C | - 40 bis 125 | 150 ± 3 | 175 ± 3 |
| D | - 40 bis 150 | 175 ± 3 | 200 ± 3 |
| E | - 40 bis 175 | 200 ± 3 | 226 ± 3 |
| F | - 40 bis 200 | 225 ± 4 | 250 ± 4 |
| G | - 40 bis 225 | 250 ± 4 | 275 ± 4 |
| H | - 40 bis 250 | 275 ± 4 | 300 ± 4 |

Der Schutz gegen Strahlungswärme erfolgt in der Regel durch Isolationsschichten mit einem geringen Wärmeleitvermögen. Bei Kabelsätzen wird zu diesem Zweck häufig auf temperaturbeständige Umhüllungen wie Wellrohre, Silikonschläuche oder metallarmierte Glasgewebeschläuche zurückgegriffen, die aber für höhere Belastungen keinen ausreichenden Schutz bieten.

Für Spezialanwendungen existieren darüber hinaus so genannte Hitzereflektionsbänder, bei denen es sich um Klebebänder der eingangs genannten Art handelt. Diese Bänder bestehen aus einem Glasfasergewebe (zweite Trägerschicht), das mit einer Aluminiumfolie (erste Trägerschicht) kaschiert und rückseitig mit einem hoch temperaturbeständigen Silikonklebstoff ausgerüstet ist. Derartige Produkte werden zum Beispiel von den Firmen Tyco und Aremco, New York, angeboten. Als Produktnachteile sind bei diesen Bändern jedoch die hohe Steifigkeit des Trägers sowie der im Vergleich zu konventionellen Klebebändern hohe Preis zu nennen.

Aus der EP 1 615 238 A1 ist ein thermisch isolierendes Klebeband zum Umhüllen von langgestrecktem Gut wie insbesondere Leitungen oder Kabelsätzen mit einem bandförmigen Träger bekannt. Der Träger besteht aus einem Verbund von mindestens einer ersten Schicht und mindestens einer zweiten Schicht, wobei die erste Schicht eine metallische Schicht ist. Auf einer Seite des Trägers ist eine druckempfindliche Klebebeschichtung aufgebracht. Die zweite Schicht des Trägers bildet eine bis zu einer Temperatur von mindestens 175 °C beständige Kunststofffolie oder ein bis zu einer Temperatur von mindestens 175 °C beständiges textiles Trägermaterial.

Derartige Klebebänder, auch "Heat Reflective-Klebebänder" genannt, sind bekannt. Da die Klebebänder für die thermische Reflektionswirkung mit Überlappung zum Beispiel um Kabel gewickelt werden, wirkt sich die Steifigkeit der bekannten Klebebänder, die insbesondere auch auf die verwendeten dicken Metallschichten zurückzuführen ist, besonders negativ aus.
Weiterhin ist die Abrollkraft der Klebebänder hoch, was einen erhöhten Wickeldruck zur Folge hat und der Kabelsatz besonders wenig flexibel wird und nachteiligen Eigenschaften für den Transport und Einbau zeigt.
Der dadurch resultierende langsamere Wickelprozess führt zu höheren Kosten.

Darüber hinaus sind aluminisierte oder aluminiumkaschierte Geflechtsschläuche (beispielsweise von der Firma Bentley Harris) bekannt, ergeben aber bei Anwendung ebenfalls einen sehr gering flexiblen Kabelsatz (siehe US 5,843,542 A1 oder US 5,849,379 A1).
Der Schutz von Kabeln mit solchen meist vorgeformten Spezialprodukten erweist sich als nicht wirtschaftlich, weil die Kosten für die erwähnten Hitzeschutzmassnahmen höher liegen, als wenn auf Leitungen und Komponenten zurückgegriffen würde, die per se auch ohne solche Schutzmassnahmen den Anforderungen genügen.

Die Verwendung der thermisch isolierenden, spiralförmig gewickelten Klebebänder ist ebenfalls keine ausreichende Lösung, da beim Wickeln Kabelsätze entstehen, die eine geringe Flexibilität aufweisen. Dadurch kommt es zu Schwierigkeiten beim Transport und beim Verpacken zu Beschädigung der hitzereflektierenden Metallschicht. Der anschließende Einbau des Kabelsatzes und das Biegen in die notwendigen Formen, werden durch die fehlende Flexibilität erschwert. Eine mögliche, bereits bei diesen Prozessen erfolgte Beschädigung der Funktionsfähigkeit des Kabelsatzes ist allerdings zwingend zu vermeiden.

Die Abriebbeständigkeit ist ein Maß für die Scheuerfestigkeit von Klebebändern.
Als Methode, die Abriebbeständigkeit von Schutzsystemen in der Fahrzeugelektrik zu bestimmen, hat sich die internationale Norm ISO 6722, Kapitel 9.3 "Scrape abrasion test" (Ausgabe April 2002), etabliert. Hier wird der Prüfling (zum Beispiel die isolierte Kupferleitung oder aber das auf einen Metalldorn geklebte Wickelband) mit einem dünnen Stahldraht unter definierten Hubgeometrien und Gewichtsbelastung beansprucht, bis die Schutzhülle durchgerieben ist und es über einen Kurzschluss zum Stoppen des mitlaufenden Zählwerkes kommt.

Sofern nicht anders angegeben, beziehen sich alle Angaben zur Abriebfestigkeit auf diese ISO 6722-Methode. Das Klebeband wird dazu einlagig in Längsrichtung auf einem Metalldorn von 10 mm Durchmesser geklebt, die Scheuerbewegung findet mittig auf dem Klebeband mit einer Gewichtsbelastung von 7 N statt. Als Reibkörper wird ein Stahldraht gemäß ISO 8458-2 von 0,45 mm Durchmesser verwendet. Als Maßzahl für die Abriebfestigkeit wird die Anzahl der Hübe bis zum Kurzschluss angegeben. In Fällen von sehr hohen Scheuerbeständigkeiten kann über Erhöhung der Auflagemasse eine Verkürzung der Messzeit und Reduzierung der Hubzahl erreicht werden. Hierbei hat sich ein Auflagegewicht von 10 N als günstig erwiesen.

Die Geräuschdämpfungswirkung ist ein Maß für die geräuschmindernde Wirkung von Klebebändern.
Die physikalische Messung der Geräuschdämpfungswirkung erfolgt gemäß der Methode, wie sie in DE 100 39 982 A1 detailliert beschrieben wird. Es handelt sich hierbei um eine in der Automobilindustrie etablierte Messmethodik, wie sie beispielsweise auch in der BMW-Norm GS 95008-3 (Ausgabe Mai 2000) angegeben wird.

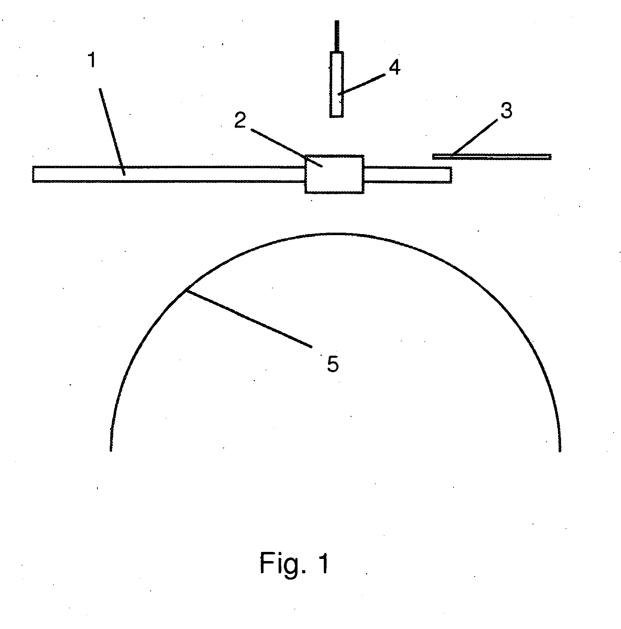

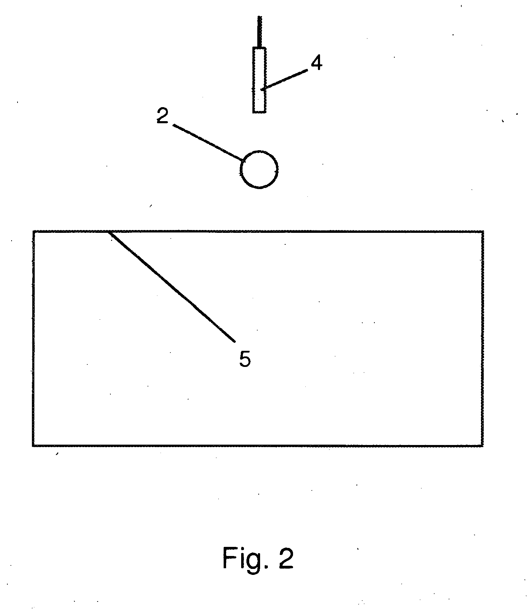

Im Folgenden wird in Verbindung mit den Figuren 1 und 2 das Messverfahren nach der BMW-Norm GS 95008-3 aus Mai 2000 ausführlich dargelegt.

Es zeigen
- Figur 1: den Aufbau der Messvorrichtung in der seitlichen Ansicht und
- Figur 2: denselben Aufbau in der horizontalen Ansicht.

Bei dieser Meßmethode wird ein definierter Stahlstab (1) mit 8 mm Durchmesser derartig mit dem Prüfling (2) - sprich Klebeband - umwickelt, dass sich Hebellängen von 220 mm und 150 mm ergeben. Der umwickelte Stahlstab (1) wird bis zur Arretierung (3) auf die Fallhöhe und mit einem Gewicht von ca. 16 g auf ein Aluminiumblech (5) fallengelassen. Das Aluminiumblech (5), das im unverformten Zustand 350 x 190 x 0,3 [mm] misst, wird halbtonnenförmig unter dem Prüfling (2) angeordnet, so dass sich eine Weite von 290 mm ergibt.
Das Gesamtschallergebnis wird mittels eines über der Prüfanordnung befindlichen Mikrofons (4) in einem Frequenzbereich von beispielsweise 20 bis 12.500 Hz mit einem handelsüblichen Schallmessgerät, beispielsweise Typ 2226 der Firma Bruel & Kjaer erfasst und aufgezeichnet. Für das menschliche Ohr als besonders relevant sind Frequenzen im Bereich von 2.000 bis 5.000 Hz.
Die Dämpfung wird als Differenz zwischen Nullwert mit nicht-umwickeltem Stahlstab sowie dem jeweiligen Messwert in dB(A) angegeben.

Neben den genannten Meßmethoden werden die Klebebänder werden gemäß der Automobilprüfungsrichtlinie LV 312 in Abriebklassen (Klasse A gleich geringe Abriebbeständigkeit bis Klasse E gleich höchste Abriebbeständigkeit) sowie in Geräuschdämpfungsklassen (Klasse A gleich geringe Geräuschdämpfung bis Klasse E gleich höchste Geräuschdämpfung, die Messung erfolgt in dB (A)) eingeteilt.

Die folgende Tabelle bietet eine Übersicht über die beschriebene Klasseneinteilung:

| Klasse | Einstufung | Anforderung Anzahl Hübe | Anforderung dB(A) Dämpfung |
|---|---|---|---|
| A | kein/gering | <100 | 0 bis <2 |
| B | gering | 100 bis 499 | >2 bis <5 |
| C | mittel | 500 bis 999 | >5 bis <10 |
| D | hoch | 1.000 bis 4.999 | >10 bis <15 |
| E | sehr hoch | >5.000 | >15 |

Aufgabe der Erfindung ist es, ein hitzereflektierendes Klebeband zur Verfügung zu stellen, das bei der Ummantelung von beispielsweise Kabeln neben der hohen Hitzereflektion gleichzeitig ein ummanteltes Produkt gewährleistet, also insbesondere einen Kabelbaum, das flexibler ist als die bisherigen Produkte, die mit den bekannten Klebebändern ummantelt worden sind, und das gleichzeitig einen erhöhten Abrasionsschutz bietet.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Klebebands sowie ein mit dem Klebeband ummantelter Kabelbaum vom Erfindungsgedanken umfasst.

Demgemäß betrifft die Erfindung ein hitzereflektierendes Klebeband, vorzugsweise zum Umhüllen von langgestrecktem Gut wie insbesondere Leitungen oder Kabelsätze, mit einem bandförmigen Träger, der aus einem Verbund besteht aus mindestens einer ersten Schicht, die von einem Glasgewebe mit einem Flächengewicht von 30 bis 200 g/m² gebildet wird, und mindestens einer zweiten Schicht, die von einer metallischen Schicht mit einer Dicke von 10 bis 40 µm und einer thermischen Effektivität nach SAE J2302 bei 350 °C von größer 45 °C gebildet wird, und mit einer zumindest auf einer Seite des Trägers aufgebrachten druckempfindlichen Klebebeschichtung.
Auf der freien Seite der Klebebeschichtung ist zumindest ein Streifen einer Eindeckung vorgesehen, der oder die sich in Längsrichtung des Klebebands erstrecken und der oder die zwischen 20 % und 90 % der Klebebeschichtung abdecken.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Gemäß einer vorteilhaften Ausführungsform der Erfindung ist die Klebebeschichtung auf der offenen, der zweiten Schicht gegenüberliegenden Seite der ersten Schicht aufgebracht.

Weiter vorzugsweise ist auf der offenen, der ersten Schicht gegenüberliegenden Seite der zweiten Schicht eine Silikonisierung mit besonders vorzugsweise 0,5 g/m² bis 1,5 g/m², ganz besonders vorzugsweise 1 g/m² aufgebracht, insbesondere aus Polysiloxan.
Diese Silikontrennlack-Beschichtung ermöglicht ein sehr leichtes und gleichmäßiges Abrollen des erfindungsgemäßen Klebebands bei der Anwendung. Hierdurch ergibt sich der Vorteil, dass auf die Verwendung eines Trennpapiers beziehungsweise einer Trennfolie verzichtet werden kann.
Als Beschichtung eignen sich die üblichen Polysiloxan-Trennlackbeschichtung zum Beispiel von der Firma Wacker, Rhodia oder Dow Corning. Geeignet sind Beschichtungen auf Lösemittelbasis, Emulsionsbasis oder 100%-Systeme. Diese Polysiloxan-Beschichtungen sind üblicherweise durch eine Additions- oder durch eine Kondensationsreaktion vernetzt. Vorteilhafterweise wird ein sehr leicht trennendes Polysiloxan-System für die Beschichtung verwendet.

Die Biegesteifigkeit des Trägers und damit des Klebebands in Längs- und Querrichtung ist gemäß einer vorteilhaften Ausführungsform der Erfindung kleiner 500 mN, vorzugsweise kleiner 300 mN (gemessen mit einem Softometer KWS basic 2000 mN der Firma Wolf).
Die Biegesteifigkeit des Trägers und damit des Klebebands ist gemäß einer weiteren vorteilhaften Ausführungsform der Erfindung in Längsrichtung kleiner 230 mN und in Querrichtung kleiner 150 mN (ebenfalls gemessen mit einem Softometer KWS basic 2000 mN der Firma Wolf).

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.
Wird das Klebeband zur Ummantelung eines Kabelbaums eingesetzt, indem das Klebeband in einer spiralförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.
Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderem Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.
Für das sichere und wirtschaftliche Aufbringen des Klebebands in besagter spiralförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen der Erfindung, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.

Besonders vorzugsweise verbleiben ein oder zwei Klebestreifen, deren Gesamtbreite 20 bis 50 % der Breite des Trägers ausmacht.

Insbesondere wenn die Klebebeschichtung nicht vollflächig erfolgt, sondern beispielsweise streifenförmig, beziehen sich die angegebenen Prozentzahlen auf die Breite der Streifen der Eindeckung in Bezug auf die Breite des Trägers, sprich erfindungsgemäß weisen der oder die Streifen der Eindeckung eine Breite auf, die zwischen 20 und 90 % der Breite des Trägers ausmacht.

Das Glasgewebe der ersten Schicht weist vorteilhaft folgende Eigenschaften auf:
- Das Flächengewicht beträgt von 30 bis 120 g/m², bevorzugt von 80 bis 120 g/m².
- Die Anzahl der Fäden in Längs- und Querrichtung beträgt jeweils 1 bis 10 Fäden/cm, bevorzugt jeweils 3 bis 10 Fäden/cm und/oder
- die zur Bildung des Glasgewebes verwendeten Fäden weisen einen Titer von kleiner 150 tex, vorzugsweise kleiner 100 tex auf.

Gemäß einer weiteren vorteilhaften Ausführungsform der Erfindung weist die metallische Schicht eine Dicke von 12 bis 20 µm auf. Gegebenenfalls weist dies darüber hinaus eine Prägung auf.
Als Metalle können gewählt werden Silber, Kupfer, Gold, Platin, Aluminium und Aluminiumverbindungen, Zinn, Nichrom, NIROSTA, Titan, Metalloxide wie Cadmiumoxide, Zinnoxide, Zinkoxide, Magnesiumoxide, vorzugsweise Aluminium. Diese Aufzählung ist dabei als nicht abschließend zu betrachten, sondern der Fachmann kann weitere hier nicht explizit genannte Metallschichten wählen, ohne den Erfindungsgedanken zu verlassen.

Um aus dem Träger ein Selbstklebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.
Das Auftragsgewicht bewegt sich im Bereich zwischen 20 bis 100 g/m².
Als Beschichtungstechnologie kommen bekannte Systeme zum Zuge, wobei sich Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.
Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.
Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal ® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Vorzugsweise besteht also die Klebebeschichtung aus einer acrylat- oder silikonhaltigen Klebemasse.

Die Klebemasse kann in Längsrichtung des Klebebands in Form eines Streifens aufgebracht sein, der eine geringere Breite aufweist als der Träger des Klebebands.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.

Als Materialien für die Eindeckung kommen die insbesondere für Kabelbandagierungsanwendungen üblichen Folien basierend auf Polyolefinen (zum Beispiel Polyethylen-, Polypropylen-, mono- oder biaxial orientierte Polypropylenfolien, Polyester-, PA-, und andere Folien) oder PVC in Betracht, bevorzugt solche mit Weichmachergehalten zwischen 20 und 60 phr.

Als Material können weiterhin alle bekannten textilen Träger wie eine Schlingenware, ein Velour, ein Gelege, ein Gewebe, ein Gewirke, insbesondere ein PET-Filamentgewebe oder ein Polyamid-Gewebe, oder ein Vlies eingesetzt werden, wobei unter "Vlies" zumindest textile Flächengebilde gemäß EN 29092 (1988) sowie Nähwirkvliese und ähnliche Systeme zu verstehen sind.
Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Mayer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.
Als Eindeckung kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.
Schließlich sind auch Nähvliese geeignet. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.
Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet sind.
Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.
Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Als Ausgangsmaterialien für die textilen Materialien sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung eingesetzt werden. Insbesondere verschleißfeste Polymere wie Polyester, Polyolefine, Polyamide oder Glas- oder Carbonfasern Verwendung.

Als Material eignen sich auch Laminate aus Folien oder aus bahnförmigen Schaumstoffen (beispielsweise aus Polyethylen und Polyurethan).

Durch geeignete Auswahl des Materials lässt sich die mit dem Klebeband gebildete Umhüllung in weiten Bereichen variieren. So sind Abrieb- und Temperaturbeständigkeiten, Dämpfungseigenschaften sowie Farbe und Erscheinungsform der Eindeckung wählbar.

Des Weiteren können die erste Schicht, die Streifen der Eindeckung und/oder die Klebebeschichtung beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet sein. Die Flammschutzmittel können auch bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Das Klebeband kann vorzugsweise eine Abriebbeständigkeit nach ISO 6722 bei einlagiger Messung aufweisen, nach der eine Anzahl von Hüben von mehr als 500, insbesondere von 800 bis 2500, überstanden werden.

Dann kann das Klebeband eine Geräuschdämpfung nach BMW GS 95008-3 bei einlagiger Messung von mehr als 3 dB (A), insbesondere 5 dB (A) bis 6 dB (A), aufweisen.

Das Klebeband ist vorzugsweise zumindest in Querrichtung von Hand einreißbar.
Um die Darreichung des Klebebands zu optimieren, erstrecken sich in einer bevorzugten Ausführungsform der Erfindung Schwächungslinien über die gesamte Breite des Klebebands.
Um ein besonders einfaches Arbeiten für den Anwender zu ermöglichen, sind die Schwächungslinien rechtwinklig zur Laufrichtung des Klebebands ausgerichtet und/oder in regelmäßigen Abständen angeordnet.
Eine weitere Verbesserung bei der Anwendung des Klebebands lässt sich erzielen, wenn das Klebeband in bevorzugt regelmäßigen Abständen komplett durchtrennt ist und als so genannte "kiss-cut Stanzlinge" auf Trennpapier aufgebracht ist. Auf diese Weise können durch Verwendung eines Dispensers die einzelnen Stanzlinge gezielt verspendet werden.
Bevorzugt sind die Schwächungslinien in Form von Perforationen ausgestaltet.
Es lassen sich auf diese Weise Kanten zwischen den einzelnen Abschnitten erzielen, die sehr fusselfrei sind, also ein unerwünschtes Ausfransen vermieden wird.
Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.
Weitere Möglichkeiten stellen gesteuert intermittierend arbeitende Schneidtechnologien dar wie beispielsweise die Verwendung von Lasern, Ultraschall, Hochdruckwasserstrahlen. Wird wie beim Laser- oder Ultraschallschneiden ein Teil der Energie als Wärme in das Material eingebracht, lassen sich im Schneidbereich das Material verschmelzen, so dass ein störendes Ausfasern weitestgehend vermieden wird und man randscharfe Schneidkanten erhält. Letztere Verfahren eignen sich auch, um spezielle Schneidkantengeometrien zu erzielen, beispielsweise konkav oder konvex ausgeformte Schneidkanten.
Die Höhe der Stachel beziehungsweise Messer auf den Stanzwalzen beträgt bevorzugt 150 % der Dicke des Klebebands.

Das Loch-Steg-Verhältnis bei der Perforierung, also wie viel Millimeter hält das Material zusammen ("Brücke"), wie viel Millimeter sind durchgetrennt, bestimmt, wie leicht das Klebeband einzureißen ist. Des Weiteren beeinflusst dies Verhältnis letztlich auch, wie fusselfrei die Abrisskante zu erhalten ist.
Vorzugsweise beträgt die Stegbreite ungefähr 2 mm und die Schnittbreite zwischen den Stegen ungefähr 5 mm, das heißt, es wechseln sich 2 mm breite Stege mit 5 mm Einschnitten ab. Das Loch-Steg-Verhältnis beträgt demgemäß vorzugsweise 2:5.
Mit dieser Schwächung des Materials lässt sich eine ausreichend geringe Abreißkraft erzielen.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich ist vom Erfindungsgedanken auch ein langgestrecktes Gut wie insbesondere ein Kabelsatz umfasst, ummantelt mit dem erfindungsgemäßen Klebeband.

Anhand der nachfolgend beschriebenen Figuren wird das erfindungsgemäße Klebeband in einer besonders vorteilhaften Ausführungsform näher erläutert, ohne hiermit die Erfindung einschränken zu wollen.

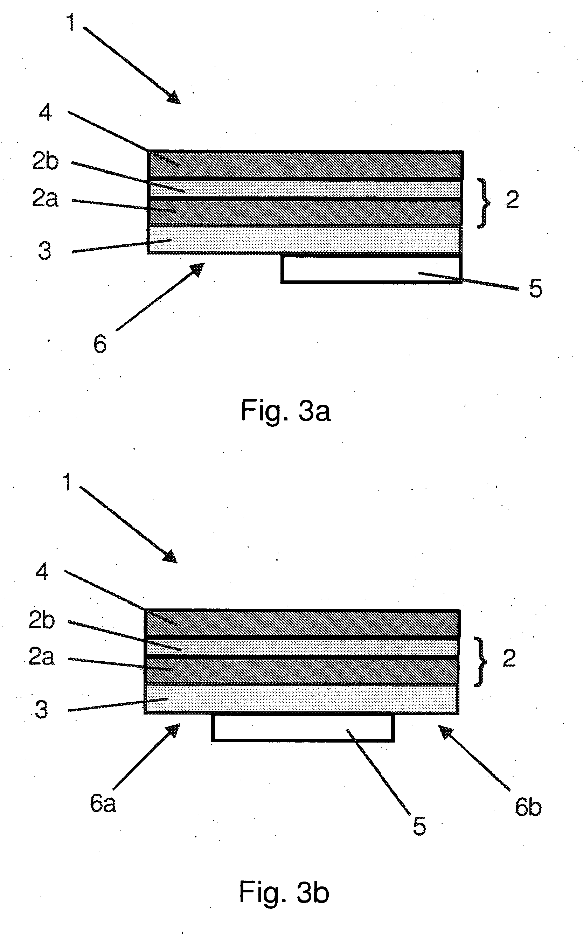

Es zeigen
- Figur 3a: das erfindungsgemäße Klebeband in einer ersten vorteilhaften Ausführungsform im seitlichen Schnitt,
- Figur 3b: das erfindungsgemäße Klebeband in einer zweiten vorteilhaften Ausführungsform im seitlichen Schnitt,

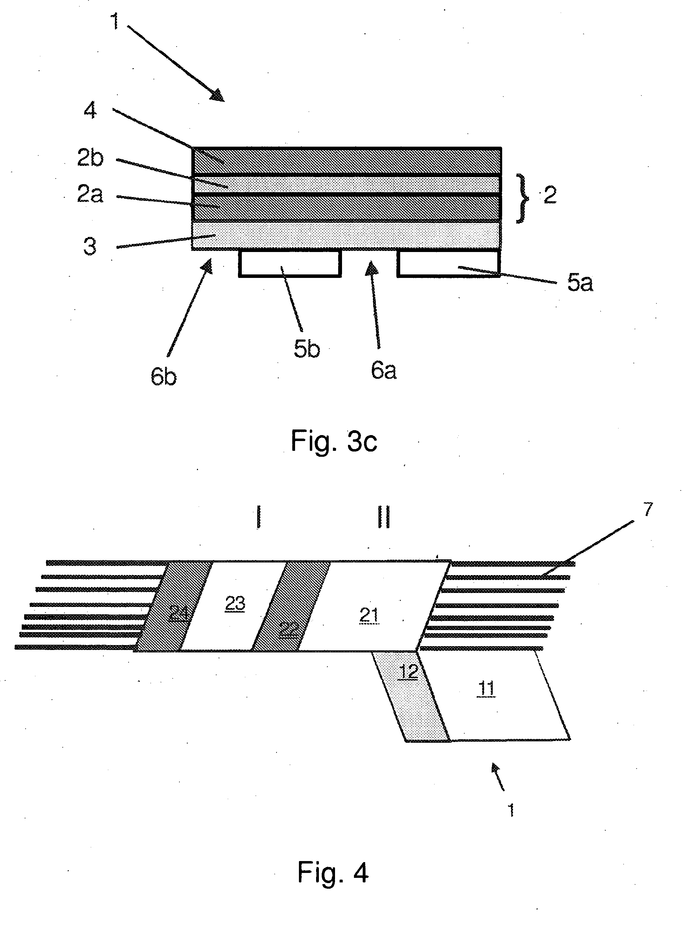

- Figur 3c: das erfindungsgemäße Klebeband in einer dritten vorteilhaften Ausführungsform im seitlichen Schnitt,
- Figur 4: die Verwendung des erfindungemäßen Klebebands gemäß der ersten vorteilhaften Ausführungsform beim Ummanteln von Kabeln, sprich einen Kabelbaum.

Nach Figur 3a umfasst ein erfindungsgemäßes hitzereflektierendes Klebeband (1), einen bandförmigen Träger (2), der aus einem Verbund besteht aus mindestens einer ersten Schicht (2a), die von einem Glasgewebe mit einem Flächengewicht von 30 bis 200 g/m² gebildet wird, und mindestens einer zweiten Schicht (2b), die von einer metallischen Schicht mit einer Dicke von 10 bis 40 µm und einer thermischen Effektivität nach SAE J2302 bei 350 °C von größer 45 °C gebildet wird.
Auf einer Seite des Trägers (2) ist eine druckempfindliche Klebebeschichtung (3) aufgebracht.
Auf der offenen, der ersten Schicht (2a) gegenüberliegenden Seite der zweiten Schicht (2b) ist eine Silikonisierung (4) aufgebracht.
Auf der Klebebeschichtung (3) ist genau ein Streifen (5) der Eindeckung vorhanden, und zwar derart, dass der Streifen (5) direkt an einer der Längskanten des Trägers (2) liegt. Auf diese Weise ergibt sich ein in Längsrichtung des Klebebands (1) erstreckender Klebestreifen (6).

In der Figur 3b ist der Streifen (5) mittig auf der Klebebeschichtung (3) aufgebracht, so dass sich zwei an den Kanten des Trägers (2) in Längsrichtung des Klebebands (1) erstreckende Klebestreifen(6a, 6b) ergeben.

In der Figur 3c sind zwei Streifen (5a, 5b) auf der Klebebeschichtung (3) aufgebracht, so dass sich zwei an den Kanten des Trägers (2) in Längsrichtung des Klebebands (1) erstreckende Klebestreifen(6a, 6b) ergeben.

In der Figur 4 ist ein Ausschnitt eines Kabelbaums gezeigt, der sich aus einer Bündelung von einzelnen Kabeln (7) zusammensetzt und der mit dem erfindungsgemäßen Klebeband (1) ummantelt ist. Das Klebeband (1) wird in einer spiralförmigen Bewegung um den Kabelbaum geführt.

Der gezeigte Ausschnitt des Kabelbaums zeigt zwei Wicklungen I und II des Klebebands (1). Nach links hin würden sich würden weitere Wicklungen erstrecken, diese sind hier nicht dargestellt.
Auf der Klebebeschichtung (3) ist ein Streifen (5) der Eindeckung vorhanden, so dass sich nichtklebende Bereiche (11, 21, 23) des Klebebands mit klebenden Bereichen (12, 22, 24) abwechseln. (Die Abschnitte 22, 24 sind im Gegensatz zur offen liegenden Klebemasse 12 von außen nicht sichtbar, weshalb die dichtere Schraffur zur Darstellung gewählt ist.)
Die Ummantelung des Kabelbaums erfolgt derartig, dass der Klebemassestreifen (6) vollständig auf dem Klebeband (1) verklebt. Eine Verklebung mit den Kabeln (7) ist ausgeschlossen.

Die Aufgabe der Erfindung besteht darin, eine thermisch isolierende Umhüllung mit geringen Herstellaufwand und geringen Anbringungskosten und somit einer einfachen Darreichungsform zu schaffen, die die wenig temperaturbeständige Isolierung der Leitungen in einem Kabelsatz durch den partiellen Einsatz einer Ummantelung speziell in Bereichen höherer Temperaturen unter Erfüllung der Anforderungen (wie zum Beispiel in der Automobilprüfungsrichtlinie LV 312 gefordert) schützt und gleichzeitig die Anforderungen an erhöhten Abrasionsschutz erfüllt.

Diese Aufgabe muss als gelöst betrachtet werden.

Durch den oder Streifen der Eindeckung auf der Klebebeschichtung werden ein nichtklebender Bereich geschaffen und darüber hinaus weitere Funktionen addiert, die sich in mehrfacher Hinsicht vorteilhaft auf die Eigenschaften des umhüllten Kabelsatzes auswirkt.
Besonders vorteilhaft wirkt sich die nicht vollflächig klebende Umhüllung der Erfindung auf die Abrasionsbeständigkeit aus. Die Forderungen aus OEM-Spezifikationen wie der LV 312 werden erfüllt.
Besonders vorteilhaft wirkt sich die nicht vollflächig klebende Umhüllung der Erfindung auf die Schalldämpfung aus. Die Forderungen aus OEM-Spezifikationen wie der LV 312 werden erfüllt.

Besonders vorteilhaft wirkt sich die nicht vollflächig klebende Umhüllung der Erfindung auf die Flexibilität des Kabelsatzes aus. Die Forderungen aus OEM-Spezifikationen wie der Fiat Auto Normazione vom 19. Dezember 2001, Procurement Specification 9.91220, Kapitel 2.4.1: Flexibility test, lassen sich besonders vorteilhaft erfüllen.

Die Erfindung erfüllt sodann die Anforderung an Dauergebrauchstemperaturen zum Beispiel 200 °C (Klasse F) nach SAE J 2192 oder anderen Spezifikationen.

Überraschend und für den Fachmann unerwartet zeigt das erfindungsgemäße Klebeband weiterhin das Merkmal, trotz der gegenüber den bekannten Bändern sehr viel dünneren Metallschicht hervorragend die Hitze zu reflektieren.
Gleichzeitig ist die dünne Metallschicht auch dafür verantwortlich, dass das Klebeband zu weitaus flexibleren Produkten führt, wenn diese mit dem Klebeband ummantelt sind.

Dies zeigen auch folgende vergleichende Messungen.

Die im Folgenden beschriebenen Klebebänder bestehen aus den nacheinander aufgeführten Schichten (zweite Schicht, erste Schicht, vollflächige Klebebebeschichtung auf der ersten Schicht).

Folgende Materialien sind untersucht worden:
Vergleichsbeispiel 1:
   17 µm Aluminiumfolie, 100 g/m² Glasgewebe, 90 g/m² druckempfindliche Acrylatmasse (Acrylat-PSA)
Beispiel 2:
   17 µm Aluminiumfolie, 100 g/m² Glasgewebe, 90 g/m² Acrylat-PSA, 130 g/m² PET-Cloth als Streifen auf der Klebebeschichtung, wobei der an der Längskante angeordnete Streifen die Klebebeschichtung zu 66 % abdeckt
Beispiel 3:
   17 µm Aluminiumfolie, 100 g/m² Glasgewebe, 90 g/m² Acrylat-PSA, 200 g/m² Malivlies als Streifen auf der Klebebeschichtung, wobei der an der Längskante angeordnete Streifen die Klebebeschichtung zu 66 % abdeckt
Beispiel 4:
   17 µm Aluminiumfolie, 100 g/m² Glasgewebe, 90 g/m² Acrylat-PSA, 180 g/m² Maliwatt als Streifen auf der Klebebeschichtung, wobei der an der Längskante angeordnete Streifen die Klebebeschichtung zu 66 % abdeckt
Vergleichsbeispiel 5:
   30 µm Aluminiumfolie mit 300 g/m² Glasgewebe, 90 g/m² Acrylat

### Ergebnisse

Abriebbeständigkeit nach LV 312:
Die Abriebbeständigkeit des Klebebands kann durch das Einkaschieren des Streifens in allen Fällen deutlich verbessert werden:

**Tabelle 1: Abriebbeständigkeit**

| Muster | Abrieb |
|---|---|
| | Hübe |
| Vergleichsbeispiel 1 | 24 |
| Beispiel 2 | 1200 |
| Beispiel 3 | 2300 |
| Beispiel 4 | 1100 |
| Vergleichsbeispiel 5 | 100 |

Geräuschdämpfung (BMW GS95008-3)
Die Dämpfungseigenschaften des Klebebands können durch das Einkaschieren des Streifens im Einzelfall deutlich verbessert werden:

**Tabelle 2: Geräuschdämpfung**

| Muster | Dämpfung |
|---|---|
| | db (A) |
| Vergleichsbeispiel 1 | 4,2 |
| Beispiel 2 | 5,6 |
| Beispiel 3 | 3 |
| Beispiel 4 | 13,9 |
| Vergleichsbeispiel 5 | 8,9 |

Biegesteifigkeit
Die Biegesteifigkeit ist ein Maß für die Flexibilität eines Trägers oder eines Trägerverbundes. Die in Tabelle 3 aufgeführten Werte zeigen, dass durch das Hinzukaschieren eines Streifens aus unterschiedlichen textilen Materialien die Biegesteifigkeit in einem akzeptablen Rahmen erhöht wird. Das Muster "Beispiel 3" verändert sich kaum in der Flexibilität, hat aber eine Abriebfestigkeit von ca. 1200 Hüben (Tabelle 1).
Die Biegesteifigkeiten wurden mit einem Softometer KWS basic 2000 mN der Firma Wolf gemessen.

**Tabelle 3: Biegesteifigkeiten**

| Muster | BS längs | BS quer |
|---|---|---|
| | mN | mN |
| Vergleichsbeispiel 1 | 229 | 148 |
| Beispiel 2 | 260 | 180 |
| Beispiel 3 | 450 | 340 |
| Beispiel 4 | 300 | 200 |
| Vergleichsbeispiel 5 | 558 | 352 |

## Patentansprüche

1. Hitzereftektierendes Klebeband (1), vorzugsweise zum Umhüllen von langgestrecktem Gut wie insbesondere Leitungen oder Kabelsätze, mit einem bandförmigen Träger (2), der aus einem Verbund besteht aus mindestens einer ersten Schicht (2a), die von einem Glasgewebe mit einem Flächengewicht von 30 bis 200 g/m² gebildet wird, und mindestens einer zweiten Schicht (2b), die von einer metallischen Schicht mit einer Dicke von 10 bis 40 µm und einer thermischen Effektivität nach SAE J2302 bei 350 °C von größer 45 °C gebildet wird, mit einer zumindest auf einer Seite des Trägers (2) aufgebrachten druckempfindlichen Klebebeschichtung (3) und zumindest einem auf der freien Seite der Klebebeschichtung (3) vorgesehenen Streifen (5) einer Eindeckung, der oder die sich in Längsrichtung des Klebebands (1) erstrecken und der oder die zwischen 20% und 90 % der Klebebeschichtung (3) abdecken.

2. Hitzereflektierendes Klebeband nach Anspruch 1,
**dadurch gekennzeichnet, dass**
die Klebebeschichtung (3) auf der offenen, der zweiten Schicht (2b) gegenüberliegenden Seite der ersten Schicht (2a) aufgebracht ist.

3. Hitzereflektierendes Klebeband nach Anspruch 1 oder 2,
**dadurch gekennzeichnet, dass**
auf der offenen, der ersten Schicht (2a) gegenüberliegenden Seite der zweiten Schicht (2b) eine Silikonisierung (4) mit vorzugsweise 0,5 g/m² bis 1,5 g/m², besonders vorzugsweise 1 g/m² aufgebracht ist.

4. Hitzereflektierendes Klebeband nach zumindest einem der Ansprüche 1 bis 3,
**dadurch gekennzeichnet, dass**
die Biegesteifigkeit des Klebebands in Längs- und Querrichtung kleiner 500 mN, vorzugsweise kleiner 300 mN, besonders vorzugsweise in Längsrichtung kleiner 230 mN und in Querrichtung kleiner 150 mN ist (gemessen mit einem Softometer KWS basic 2000 mN der Firma Wolf).

5. Hitzereflektierendes Klebeband nach zumindest einem der vorherigen Ansprüche,
**dadurch gekennzeichnet, dass**
das Glasgewebe der ersten Schicht (2a) folgende Eigenschaften aufweist:
ein Flächengewicht von 80 bis 120 g/m²,
die Anzahl der Fäden in Längs- und Querrichtung jeweils 3 bis 10 Fäden/cm beträgt, und/oder
die zur Bildung des Glasgewebes verwendeten Fäden einen Titer von kleiner 150 tex, vorzugsweise kleiner 100 tex aufweisen.

6. Hitzereflektierendes Klebeband nach zumindest einem der vorherigen Ansprüche,
**dadurch gekennzeichnet, dass**
die metallische Schicht (2b) eine Dicke von 12 bis 20 µm aufweist.

7. Hitzereflektierendes Klebeband nach zumindest einem der vorherigen Ansprüche,
**dadurch gekennzeichnet, dass**
die metallische Schicht (2b) aus Aluminium besteht.

8. Hitzereflektierendes Klebeband nach zumindest einem der vorherigen Ansprüche,
**dadurch gekennzeichnet, dass**
die Klebebeschichtung aus einer acrylat- oder silikonhaltigen Klebemasse besteht.

9. Hitzereflektierendes Klebeband nach zumindest einem der vorherigen Ansprüche,
**dadurch gekennzeichnet, dass**
nur ein Streifen (5) der Eindeckung auf der Klebebeschichtung (3) vorhanden ist.

10. Hitzereflektierendes Klebeband nach zumindest einem der vorherigen Ansprüche,
**dadurch gekennzeichnet, dass**
der Streifen (5) der Eindeckung derart auf der Klebebeschichtung (3) aufgebracht ist, dass die äußere Kante des Streifens (5) deckungsgleich mit der äußeren Kante des Trägers (2) ist oder
dass der Streifen (5) mittig auf der Klebebeschichtung aufgebracht ist.

11. Hitzereflektierendes Klebeband nach zumindest einem der vorherigen Ansprüche,
**dadurch gekennzeichnet, dass**
die erste Schicht (2a), der Streifen (5) der Eindeckung und/oder die Klebebeschichtung (3) beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet ist.

12. Hitzereflektierendes Klebeband nach zumindest einem der vorherigen Ansprüche,
**dadurch gekennzeichnet, dass**
das Klebeband eine Abriebbeständigkeit nach ISO 6722 bei einlagiger Messung aufweist, nach der eine Anzahl von Hüben von mehr als 500, insbesondere von 800 bis 2500, überstanden werden.

13. Hitzereflektierendes Klebeband nach zumindest einem der vorherigen Ansprüche,
**dadurch gekennzeichnet, dass**
das Klebeband eine Geräuschdämpfung nach BMW GS 95008-3 bei einlagiger Messung von mehr als 3 dB (A), insbesondere 5 dB (A) bis 6 dB (A), aufweist.

14. Verwendung eines Klebebands nach zumindest einem der vorherigen Ansprüche zum Ummanteln von langgestrecktem Gut, wie insbesondere Kabelsätzen, wobei das langgestreckte Gut in axialer Richtung von dem Klebeband umhüllt wird oder das Klebeband in einer schraubenförmigen Spirale um das langgestreckte Gut geführt wird.

15. Langgestrecktes Gut, wie insbesondere ein Kabelsatz, ummantelt mit einem Klebeband nach zumindest einem der vorherigen Ansprüche.

## Claims

1. Heat-reflecting adhesive tape (1), preferably for wrapping elongate material such as, more particularly, leads nr cable harnesses, having a tapelike backing (2) composed of an assembly comprising at least one first layer (2a), formed by a glass fabric having a basis weight of 30 to 200 g/m², and at least one second layer (2b), formed by a metallic layer having a thickness of 10 to 40 µm and a thermal effectiveness to SAE J2302 at 350°C of greater than 45°C, having a pressure-sensitive adhesive coating (3) applied at least to one side of the backing (2), and at least one stripe (5) of a covering which is provided on the free side of the adhesive coating (3) and which extend(s) in the longitudinal direction of the adhesive tape (1) and which cover(s) between 20% and 90% of the adhesive coating (3).

2. Heat-reflecting adhesive tape according to Claim 1, **characterized in that** the adhesive coating (3) is applied to the open side, opposite the second layer (2b), of the first layer (2a).

3. Heat-reflecting adhesive tape according to Claim 1 or 2, **characterized in that** siliconization (4) is applied at preferably 0.5 g/m² to 1.5 g/m², with particular preference 1 g/m², to the open side, opposite the first layer (2a), of the second layer (2b).

4. Heat-reflecting adhesive tape according to at least one of Claims 1 to 3, **characterized in that** the flexural rigidity of the adhesive tape in longitudinal and transverse direction is less than 500 mN, preferably less than 300 mN, with particular preference in the longitudinal direction is less than 230 mN and in the transverse direction is less than 150 mN (as measured with a Softometer KWS basic 2000 mN from Wolf).

5. Heat-reflecting adhesive tape according to at least one of the preceding claims, **characterized in that** the properties of the glass fabric of the first layer (2a) are as follows:
a basis weight of 80 to 120 g/m²;
the number of filaments in longitudinal and transverse direction is in each case 3 to 10 filaments/cm;
and/or
the filaments used to form the glass fabric have a linear density of less than 150 tex, preferably less than 100 tex.

6. Heat-reflecting adhesive tape according to at least one of the preceding claims, **characterized in that** the metallic layer (2b) has a thickness of 12 to 20 µm.

7. Heat-reflecting adhesive tape according to at least one of the preceding claims, **characterized in that** the metallic layer (2b) is composed of aluminium.

8. Heat-reflecting adhesive tape according to at least one of the preceding claims, **characterized in that** the adhesive coating is composed of an adhesive comprising acrylate or silicone.

9. Heat-reflecting adhesive tape according to at least one of the preceding claims, **characterized in that** there is only one stripe (5) of the covering on the adhesive coating (3).

10. Heat-reflecting adhesive tape according to at least one of the preceding claims, **characterized in that** the stripe (5) of the covering is applied on the adhesive coating (3) in such a way that the outer edge of the stripe (5) is congruent with the outer edge of the backing (2) or in such a way that the stripe (5) is applied centrally on the adhesive coating.

11. Heat-reflecting adhesive tape according to at least one of the preceding claims, **characterized in that** the first layer (2a), the stripe (5) of the covering and/or the adhesive coating (3) have or has been made flame retardant by means, for example, of a flame retardant composed of ammonium polyphosphate, magnesium hydroxide and/or aluminium hydroxide or by means of a chlorinated paraffin, where appropriate in combination with antimony trioxide.

12. Heat-reflecting adhesive tape according to at least one of the preceding claims, **characterized in that** the adhesive tape has an abrasion resistance to ISO 6722 on single-ply measurement such as to withstand a number of strokes of more than 500, more particularly of 800 to 2500.

13. Heat-reflecting adhesive tape according to at least one of the preceding claims, **characterized in that** the adhesive tape exhibits sound damping to BMW GS 95008-3 on single-ply measurement of more than 3 dB (A), more particularly 5 dB (A) to 6 dB (A).

14. Use of an adhesive tape according to at least one of the preceding claims for jacketing elongate material, such as, more particularly, cable harnesses, the elongate material being wrapped in the axial direction by the adhesive tape, or the adhesive tape being guided in a helical spiral around the elongate material.

15. Elongate material, such as, more particularly, a cable harness, jacketed with an adhesive tape according to at least one of the preceding claims.

## Revendications

1. Bande adhésive (1) réfléchissant la chaleur, de préférence pour envelopper un produit allongé, tel qu'en particulier des conduites ou des câblages, avec un support (2) en forme de bande, qui est constitué par un composite d'au moins une première couche (2a), formée par un tissu en verre présentant un poids surfacique de 30 à 200 g/m², et d'au moins une deuxième couche (2b), formée par une couche métallique d'une épaisseur de 10 à 40 µm et d'une efficacité thermique selon SAE J2302 à 350°C supérieure à 45°C, avec un revêtement adhésif (3) sensible à la pression appliqué sur au moins une face du support (2) et au moins une bande (5) d'un recouvrement, prévue sur la face libre du revêtement adhésif (3), qui s'étend(ent) dans le sens longitudinal de la bande adhésive (1) et qui recouvre(nt) entre 20% et 90% du revêtement adhésif (3).

2. Bande adhésive réfléchissant la chaleur selon la revendication 1, **caractérisée en ce que** le revêtement adhésif (3) est appliqué sur la face ouverte, opposée à la deuxième couche (2b) de la première couche (2a).

3. Bande adhésive réfléchissant la chaleur selon la revendication 1 ou 2, **caractérisée en ce que** sur la face ouverte, opposée à la première couche (2a), de la deuxième couche (2b) est appliqué un siliconage (4) à raison de préférence de 0,5 g/m² à 1,5 g/m², de manière particulièrement préférée de 1 g/m².

4. Bande adhésive réfléchissant la chaleur selon au moins l'une quelconque des revendications 1 à 3, **caractérisée en ce que** la résistance à la flexion de la bande adhésive dans le sens longitudinal et transversal est inférieure à 500 mN, de préférence inférieure à 300 mN, de manière particulièrement préférée, dans le sens longitudinal, inférieure à 230 mN et dans le sens longitudinal inférieure à 150 mN (mesurée avec un Softometer KWS basic 2000 mN de la société Wolf).

5. Bande adhésive réfléchissant la chaleur selon au moins l'une quelconque des revendications précédentes, **caractérisée en ce que** le tissu en verre de la première couche (2a) présente les propriétés suivantes : un poids surfacique de 80 à 120 g/m², le nombre de fils dans le sens longitudinal et transversal est à chaque fois de 3 à 10 fils/cm, et/ou les fils utilisés pour la formation du tissu en verre présentent un titre inférieur à 150 tex, de préférence inférieur à 100 tex.

6. Bande adhésive réfléchissant la chaleur selon au moins l'une quelconque des revendications précédentes, **caractérisée en ce que** la couche métallique (2b) présente une épaisseur de 12 à 20 µm.

7. Bande adhésive réfléchissant la chaleur selon au moins l'une quelconque des revendications précédentes, **caractérisée en ce que** la couche métallique (2b) est en aluminium.

8. Bande adhésive réfléchissant la chaleur selon au moins l'une quelconque des revendications précédentes, **caractérisée en ce que** le revêtement adhésif est constitué par une masse adhésive contenant de l'acrylate ou du silicone.

9. Bande adhésive réfléchissant la chaleur selon au moins l'une quelconque des revendications précédentes, **caractérisée en ce qu'**il n'existe qu'une bande (5) du recouvrement sur le revêtement adhésif (3).

10. Bande adhésive réfléchissant la chaleur selon au moins l'une quelconque des revendications précédentes, **caractérisée en ce que** la bande (5) du recouvrement est appliquée de manière telle sur le revêtement adhésif (3) que le côté extérieur de la bande (5) est affleurant avec le côté extérieur du support (2) ou **en ce que** la bande (5) est appliquée au centre sur le revêtement adhésif.

11. Bande adhésive réfléchissant la chaleur selon au moins l'une quelconque des revendications précédentes, **caractérisée en ce que** la première couche (2a), la bande (5) du recouvrement et/ou le revêtement adhésif (3) est/sont par exemple apprété(e)(s) de manière ignifuge à l'aide d'un agent ignifuge constitué de polyphosphate d'ammonium, d'hydroxyde de magnésium et/ou d'hydroxyde d'aluminium ou à l'aide d'une chloroparaffine, le cas échéant en combinaison avec du trioxyde d'antimoine.

12. Bande adhésive réfléchissant la chaleur selon au moins l'une quelconque des revendications précédentes, **caractérisée en ce que** la bande adhésive présente une résistance à l'usure selon la norme ISO 6722 lors de la mesure sur une couche qui résiste à un nombre de courses de frottement de plus de 500, en particulier de 800 à 2500.

13. Bande adhésive réfléchissant la chaleur selon au moins l'une quelconque des revendications précédentes, **caractérisée en ce que** la bande adhésive présente une isolation acoustique selon la norme BMW GS 95008-3 lors d'une mesure sur une couche supérieure à 3 dB (A), en particulier de 5 dB (A) à 6 dB (A).

14. Utilisation d'une bande adhésive selon au moins l'une quelconque des revendications précédentes, pour envelopper un produit allongé, tel qu'en particulier des câblages, où le produit allongé est enveloppé dans le sens axial par la bande adhésive ou la bande adhésive est guidée en une spirale hélicoïdale autour du produit allongé.

15. Produit allongé, tel qu'en particulier un câblage, enveloppé par une bande adhésive selon au moins l'une quelconque des revendications précédentes.
